# EUROPÄISCHE PATENTSCHRIFT

(11) **EP 0 980 323 B1**
(45) Veröffentlichungstag und Bekanntmachung des Hinweises auf die Patenterteilung: **29.08.2001**
(21) Anmeldenummer: 98933435.4
(22) Anmeldetag: 04.05.1998
(51) Int. Cl.: B60R 21/00, G01P 15/00

(54) **ANORDNUNG ZUM STEUERN EINES INSASSENSCHUTZMITTELS EINES KRAFTFAHRZEUGS**
CIRCUIT FOR CONTROLLING A PASSENGER PROTECTION DEVICE IN AN AUTOMOBILE
DISPOSITIF POUR COMMANDER UN MOYEN DE PROTECTION DES OCCUPANTS D'UN VEHICULE AUTOMOBILE

(30) Priorität: 07.05.1997 DE 19719454
(43) Veröffentlichungstag der Anmeldung: 23.02.2000
(73) Patentinhaber: SIEMENS AKTIENGESELLSCHAFT, 80333 München (DE)
(72) Erfinder: BLANK, Thomas, D-76187 Karlsruhe (DE); MADER, Gerhard, D-93107 Thalmassing (DE); VOGT, Richard, D-77731 Willstaett (DE)
(86) Internationale Anmeldenummer: DE9801220
(87) Internationale Veröffentlichungsnummer: WO9850256

(56) Entgegenhaltungen:
- EP-A- 0 686 533
- WO-A-97/22009
- DE-A- 19 520 608
- DE-C- 19 609 077

## Beschreibung

Die Erfindung betrifft eine Anordnung zum Steuern eines Insassenschutzmittels eines Kraftfahrzeugs gemäß Oberbegriff von Patentanspruch 1.

Eine bekannte Anordnung enthält einen Beschleunigungssensor zum Erkennen eines Aufpralls. Stellt ein Auswerter anhand des Beschleunigungssignals des Beschleunigungssensors fest, daß ein ausreichend starker Aufprall vorliegt, wird das zugeordnete Insassenschutzmittel, beispielsweise ein Airbag, ein Gurtstrammer o.ä. ausgelöst. Gemäß der DE 40 16 644 A1 wird eine solche Anordnung um einen mechanischen Beschleunigungsschalter erweitert, dessen Empfindlichkeitsachse gleichgerichtet ist mit derjenigen des Beschleunigungssensors. Dieser Beschleunigungsschalter verhindert insbesondere eine Fehlauslösung aufgrund eines defekten Beschleunigungssensors oder eines defekten Auswerters. In der DE 40 16 644 A1 wird ferner vorgeschlagen, den mechanischen Beschleunigungsschalter durch einen weiteren Beschleunigungssensor mit nachfolgender Auswerteschaltung zu ersetzen.

Aus der WO 89/11986 ist eine Anordnung zum Steuern eines Insassenschutzmittels eines Kraftfahrzeugs bekannt, die zwei Beschleunigungssensoren mit unterschiedlich gerichteten Empfindlichkeitsachsen aufweist. Der erste Beschleunigungssensor ist dabei empfindlich für Beschleunigungen parallel zur Fahrzeuglängsachse, der zweite Beschleunigungssensor für Fahrzeugquerbeschleunigungen. Ein Auswerter wertet die von den Beschleunigungssensoren gelieferten Beschleunigungssignale aus und aktiviert das zugeordnete Insassenschutzmittel, wenn entweder die Fahrzeuglängsbeschleunigung einen hoch angesetzten Schwellwert überschreitet, oder wenn Betrag und Richtung eines aus dem Längs- und Querbeschleunigungssignal gebildeten Beschleunigungsvektors vorgegebene Werte überschreiten. Somit wird das Insassenschutzmittel auch bei einem die Insassen stark gefährdenden Schrägaufprall ausgelöst, bei dem die Längsbeschleunigung alleine aber nicht den ihr zugeordneten Schwellwert überschreiten würde.

Aus der gattungsbildenden DE 37 17 427 A1 ist eine Einrichtung zum Auslösen eines Insassenschutzmittels bekannt, das bei einem Front- oder Schrägaufprall von vorne ausgelöst werden soll, nicht jedoch bei einem Seiten- oder Heckaufprall. Dazu enthält die Einrichtung zwei zueinander im Winkel kleiner 90 Grad angeordnete Sensoren, jeder davon etwa + / - 30 Grad zur Fahrzeuglängsachse ausgerichtet. Das Schutzmittel wird ausgelöst, wenn beide Sensoren ein signifikantes Signal liefern.

Aus der DE 195 37 546 A1 ist eine Einrichtung zum Auslösen eines Insassenschutzmittels mit zwei orthogonal zueinander ausgerichteten Sensoren bekannt, wobei im Hinblick auf eine Reduzierung der Rechenleistung einer die Signale bearbeitenden Auswerteeinrichtung lediglich das Signal desjenigen Sensors ausgewertet wird, aus dessen Richtung ein Aufprall vermutet wird.

Aufgabe der Erfindung ist es, mit einfachen Mitteln sicherzustellen, daß eine Fehlauslösung eines Insassenschutzmittels eines Kraftfahrzeugs verhindert wird.

Die Aufgabe wird erfindungsgemäß durch die Merkmale des Patentanspruchs 1 gelöst.

Der Auswerter erzeugt dabei ein erstes Freigabesignal, das zumindest abhängig ist von dem Beschleunigungssignal des ersten Beschleunigungssensors, sowie ein zweites Freigabesignal, das abhängig ist von dem Beschleunigungssignal des zweiten Beschleunigungssensors. Nur bei gleichzeitigem Vorliegen beider Freigabesignale wird ein Auslösen des Insassenschutzmittels eingeleitet.

Um eine ggf aufgrund eines defekten Beschleunigungssensors verursachte Fehlauslösung zu verhindern, wird dem ersten, für ein Auslösen des Insassenschutzmittels maßgebenden Beschleunigungssensor anstelle eines redundant ausgebildeten Beschleunigungssensors bzw. mechanischen Beschleunigungsschalters mit gleichgerichteter Empfindlichkeitsachse ein zweiter Beschleunigungssensor mit andersgerichteter, Empfindlichkeitsachse zur Seite gestellt. Mit Hilfe des Beschleunigungssignals des zweiten Beschleunigungssensors wird sichergestellt, daß ein mit dem ersten Beschleunigungssensor festgestellter Aufprall tatsächlich vorliegt. Die Erfindung beruht auf der Erkenntnis, daß bei einem Aufprall aus einer bestimmten Richtung Beschleunigungsanteile nicht nur in dieser Richtung nachgewiesen werden können. Bei einem solchen Aufprall können Beschleunigungsanteile auch in anderen Raumachsen nachgewiesen werden, da die Aufprallenergie nicht nur durch Karosseriedeformation in Aufprallrichtung abgebaut wird: Die Aufprallenergie wird auch durch meßtechnisch erfaßbare Fahrzeugschwingungen in Raumrichtungen abgebaut, die nicht der Aufprallrichtung entsprechen.

Dabei ist die Empfindlichkeitsachse des als Sicherheitssensor dienenden zweiten Beschleunigungssensors orthogonal zur Empfindlichkeitsachse des als Auslösesensor dienenden Beschleunigungssensors ausgerichtet. Weist der erste Beschleunigungssensor vorzugsweise eine Empfindlichkeitsachse parallel zur Fahrzeuglängsachse auf, ist damit empfindlich für Fahrzeuglängsbeschleunigungen und löst vorzugsweise bei einem Frontaufprall Insassenschutzmittel zum Frontaufprallschutz wie Fahrer- oder Beifahrerairbag oder Gurtstraffer aus, so erkennt der als Sicherheitssensor ausgebildete zweite Beschleunigungssensor vorzugsweise Fahrzeugquerbeschleunigungen oder Beschleunigungen entlang der Fahrzeughochachse. Die orthogonale Ausrichtung des zweiten Beschleunigungssensors in Bezug auf den ersten Beschleunigungssensor ist insofern von Vorteil, da das Fahrzeug bei einem Aufprall insbesondere in den zur Aufprallrichtung orthogonalen Raumachsen zum Schwingen neigt. In diesen Raumachsen können Beschleunigungssignale mit dem größten Signal-Rauschabstand aufgenommen werden.

Ist der erste Beschleunigungssensor vorzugsweise zur Aufnahme von Fahrzeugquerbeschleunigungen und damit zur Ansteuerung eines Insassenschutzmittels zum Seitenaufprallschutz - z.B. eines Seitenairbags oder eines Kopfairbags - angeordnet, so ist der zweite Beschleunigungssensor vorzugsweise empfindlich für Fahrzeuglängsbeschleunigungen oder für Fahrzeugbeschleunigungen entlang der Fahrzeughochachse. Es versteht sich, daß der zweite Beschleunigungssensor auch anders im Fahrzeug ausgerichtet werden kann, sofern sich seine Ausrichtung deutlich von der Ausrichtung des ersten Beschleunigungssensors unterscheidet.

Bei der Erfindung wird das Beschleunigungssignal des ersten Beschleunigungssensors dahingehend ausgewertet, eine Entscheidung zu treffen, ob ein Auslösen des zugeordneten Insassenschutzmittels erforderlich ist oder nicht. Zur Entscheidungsfindung kann in vorteilhafter Weise auch das Beschleunigungssignal des zweiten Beschleunigungssensors herangezogen werden, z.B. zum Erkennen eines Schrägaufpralls. Gewöhnlich wird ein zumindest durch das erste Beschleunigungssignal bestimmtes Auslösesignal gebildet - beispielsweise durch Integration des ersten Beschleunigungssignals. Das Auslösesignal wird mit einem ersten Schwellwert verglichen, der zum Auslösen ausreichend große Auslösesignalwerte von zum Auslösen ungenügend großen Auslösesignalwerten unterscheidet. Der erste Schwellwert kann konstant oder variabel ausgebildet sein. Aus dem ersten Beschleunigungssignal und ggf auch weiteren für einen Aufprall relevanten Signalen können aber auch mehrere einzelne Auslösekriterien gebildet werden, welche wiederum durch logische Verknüpfungen zu einer Auslöseentscheidung führen.

Wesentlich für die Erfindung ist, daß das Signal des zweiten Beschleunigungssensors als Kriterium dafür herangezogen wird festzustellen, ob überhaupt ein Aufprall stattgefunden hat oder nicht. Dazu wird ein vorzugsweise alleine durch das zweite Beschleunigungssignal und fahrzeugspezifische wie auch andere Parameter bestimmtes Sicherheitssignal gebildet, das mit einem zweiten Schwellwert verglichen wird. Der zweite Schwellwert unterscheidet für einen Aufprall ausreichend große Sicherheitssignalwerte von für einen Aufprall ungenügend großen Sicherheitssignalwerten. Gemäß der unterschiedlichen Funktion des Auslösesignals und des Sicherheitssignals unterscheiden sich die diesen Signalen zugeordneten Schwellwerte in ihrer Größe: Der dem Auslösesignal zugeordnete erste Schwellwert ist größer als der dem Sicherheitssignal zugeordnete zweite Schwellwert, vorzugsweise mehr als doppelt so groß.

Das Sicherheitssignal ist insbesondere durch den Betrag des zweiten Beschleunigungssignals bestimmt. In einer weiteren vorteilhaften Weiterbildung wird das Sicherheitssignal aus dem Integral über den Betrag des zweiten Beschleunigungssignals gebildet. Die Betragbildung ist insbesondere bei einer nachfolgenden Integration vorteilhaft, da das zweite Beschleunigungssignal bei einem Aufprall im wesentlichen um den Nullpunkt oszilliert und sich durch die Integration des zweiten Beschleunigungssignals ohne vorhergehende Betragbildung negative und positive Beiträge des zweiten Beschleunigungssignals aufheben würden.

Weist eine Anordnung einen Beschleunigungssensor für Fahrzeuglängsbeschleunigungen zum Steuern eines Insassenschutzmittels zum Frontaufprallschutz und einen weiteren Beschleunigungssensor für Fahrzeugquerbeschleunigungen zum Steuern eines Insassenschutzmittels zum Seitenaufprallschutz auf, so erweist sich folgende erfindungsgemäße Ausgestaltung der Anordnung als äußerst vorteilhaft: Für die Frontaufprallerkennung wird der Querbeschleunigungssensor als Sicherheitsensor verwendet um auszuschließen, daß ein fehlerbehafteter Längsbeschleunigungssensor eine Fehlauslösung des Schutzmittels zum Frontaufprallschutz verursacht; gleichzeitig wird der Längsbeschleunigungssensor als Sicherheitssensor verwendet um auszuschließen, daß ein fehlerbehafteter Querbeschleunigungssensor eine Fehlauslösung des Schutzmittels zum Seitenaufprallschutz verursacht. Bei einer solchen Anordnung sind lediglich zwei Beschleunigungssensoren erforderlich, um bei einem Aufprall aus beliegiger Richtung auslösen und gleichzeitig eine Fehlauslösung verhindern zu können.

Beide Beschleunigungssensoren sind vorzugsweise testbar ausgebildet, sodaß bei Inbetriebnahme der Anordnung oder auch während ihres Betriebs die Funktionstüchtigkeit der Sensoren und insbesondere die elektrostatisch induzierbare Auslenkbarkeit ihrer seismischer Massen überprüft werden kann.

Vorteilhafte Weiterbildungen der Erfindung sind in den Unteransprüchen gekennzeichnet. Die Erfindung und ihre Weiterbildungen werden anhand der Zeichnung näher erläutert. Es zeigen:
- Figur 1:: Ein Blockschaltbild einer erfindungsgemäßen Anordnung,
- Figuren 2 bis 4:: Verschiedene Sensoranordnungen der erfindungsgemäßen Anordnung,
- Figur 5:: Ein Flußdiagramm im Auswerter ablaufender Schritte zur Ermittlung eines zweiten Freigabesignals der Anordnung.

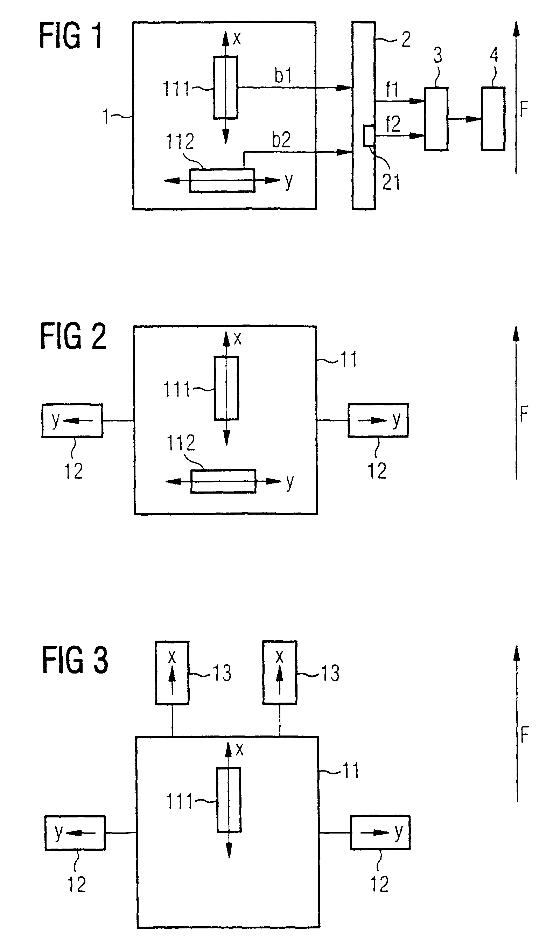

Figur 1 zeigt ein Blockschaltbild einer erfindungsgemäßen Anordnung mit einer Sensoranordnung 1, einem Auswerter 2, einem Logikelement 3 und einem Insassenschutzmittel 4. Die Sensoranordnung 1 weist einen ersten Beschleunigungssensor 111 mit einer Empfindlichkeitsachse x und einen zweiten Beschleunigungssensor 112 mit einer Empfindlichkeitsachse y auf. Bei einer durch einen Pfeil F gekennzeichneten Fahrtrichtung nimmt der erste Beschleunigungssensor 111 Fahrzeuglängsbeschleunigungen, der zweite Beschleunigungssensor 112 Fahrzeugquerbeschleunigungen auf. Die Empfindlichkeitsachsen x und y der Beschleunigungssensoren 111 und 112 sind durch Doppelpfeile gekennzeichnet.

Das Insassenschutzmittel 4 dient dem Frontaufprallschutz. Maßgebend für ein Auslösen des Insassenschutzmittels 4 ist damit ein von dem ersten Beschleunigungssensor 111 geliefertes erstes Beschleunigungssignal b1, das im Auswerter 2 ausgewertet wird. Überschreitet ein durch das erste Beschleunigungssignal b1 bestimmtes Auslösesignal einen ersten Schwellwert, so liegt ein zum Auslösen des Insassenschutzmittels 4 ausreichend starker Aufprall vor, so daß ein erstes Freigabesignal f1 an das Logikelement 3 geliefert wird. Gleichzeitig wird im Auswerter 2 durch Bewertung des zweiten Beschleunigungssignals b2 überprüft, ob auch der zweite Beschleunigungssensor 112 einen Aufprall erfaßt. Dazu wird der Betrag des zweiten Beschleunigungssignals b2 gebildet und mit einem zweiten Schwellwert verglichen, der niedriger ausgebildet ist als der dem ersten Beschleunigungssignal b1 zugeordnete Schwellwert. Übersteigt der Betrag des zweiten Beschleunigungssignals b2 den zweiten Schwellwert, so wird ein zweites Freigabesignal f2 an das Logikelement 3 geliefert. Das Logikelement 3 ist als UND-Gatter ausgebildet, so daß das Insassenschutzmittel 4 nur dann aktiviert wird, wenn sowohl das erste als auch das zweite Freigabesignal f1 und f2 gleichzeitig vorliegen. Ein Halteglied 21 des Auswerters 2 erzeugt ab Überschreiten des zweiten Schwellwerts durch den Betrag des zweiten Beschleunigungssignals b2 ein zweites Freigabesignal f2 mit einer festgelegten Mindestdauer. Somit wird erreicht, daß ein aufgrund einer kurzzeitigen Senke des zweiten Beschleunigungssignals b2 und gleichzeitig vorliegendem ersten Freigabesignal f1 verhindertes aber erwünschtes Auslösen dennoch eingeleitet wird.

Die Anordnung gemäß Figur 1 kann ferner ein weiteres nicht eingezeichnetes Insassenschutzmittel zum Seitenaufprallschutz steuern. Zum Auslösen des weiteren Insassenschutzmittels werden zwei weitere Freigabesignale benötigt, wobei das für das Auslösen des weiteren Insassenschutzmittels maßgebende Freigabesignal im wesentlichen durch die Fahrzeugquerbeschleunigung, also das zweite Beschleunigungssignal b2 bestimmt ist, wohingegen das zum Verhindern einer Fehlauslösung des weiteren Insassenschutzmittels maßgebende Freigabesignal durch die Fahrzeuglängsbeschleunigung, also das erste Beschleunigungssignal b1 bestimmt ist.

Die Figuren 2 bis 4 zeigen Sensoranordnungen für die erfindungsgemäße Anordnung, wobei im folgenden immer der zentrale Beschleunigungssensor für Längsbeschleunigungen als erster Beschleunigungssensor 111 bezeichnet wird und der zentrale Beschleunigungssensor für Querbeschleunigungen als zweiter Beschleunigungssensor 112. Aufgrund der vorbeschriebenen Mehrfachfunktionalität dieser Beschleunigungssensoren 111 und 112 als Auslösesensor oder als Sicherheitssensor gilt im Rahmen der Beschreibung der Figuren 2 bis 4 die für die Ansprüche festgelegte Zuordnung - erster Beschleunigungssensor als Auslösesensor, zweiter Beschleunigungssensor als Sicherheitssensor - als aufgehoben.

Figur 2 zeigt eine zentral im Fahrzeug - beispielsweise am Fahrzeugtunnel - angeordnete Sensoranordnung 11, die einen ersten Beschleunigungssenor 111 für Fahrzeuglangsbeschleunigungen und einen zweiten Beschleunigungssensor 112 für Fahrzeugquerbeschleunigungen enthält. Weiterhin weist die Sensoranordnung zwei ausgelagerte Beschleunigungssensoren 12 für Fahrzeugquerbeschleunigungen auf. Diese ausgelagerten Beschleunigungssensoren 12 sind vorzugsweise nahe an Fahrzeugseitenteilen angeordnet um einen Seitenaufprall nahe am Aufprallort aufnehmen zu können. Bei der Anordnung nach Figur 2 dient der erste Beschleunigungssensor 111 zum Auslösen eines Insassenschutzmittels zum Frontaufprallschutz - im folgenden Frontairbag, die ausgelagerten Beschleunigungssensoren 12 zum Ansteuern eines Rückhaltemittels zum Seitenaufprallschutz - im folgenden Seitenaitbag. Der zweite Beschleunigungssensor 112 kann gemäß der Erfindung als Sicherheitssensor für die Frontairbagauslösung eingesetzt werden wie auch in bekannter Weise als Sicherheitssensor für die Seitenairbagauslösung. Alternativ oder zusätzlich kann der erste Beschleunigungssensor 111 auch als Sicherheitssensor für die ausgelagerten Beschleunigungssensoren 12 verwendet werden.

Figur 3 zeigt eine weitere vorteilhafte Sensoranordnung mit einer Zentralanordnung 11 bestehend aus einem ersten Beschleunigungssensor 111 für Längsbeschleunigungen. Desweiteren sind ausgelagerte Beschleunigungssensoren 12 für Querbeschleunigungen vorgesehen, wie auch ausgelagerte Beschleunigungssensoren 13 für Längsbeschleunigungen. Maßgebend für ein Auslösen des Seitenairbags sind die ausgelagerten Beschleunigungssensoren 12. Als Sicherheitssensor für die ausgelagerten Beschleunigungssensoren 12 wird der erste Beschleunigungssensor 111 in erfindungsgemäßer Weise verwendet. Maßgebend für ein Auslösen des Frontairbags sind die ausgelagerten Beschleunigungssensoren 13, wobei der erste Beschleunigungssensor 111 in bekannter Weise als Sicherheitssensor dient.

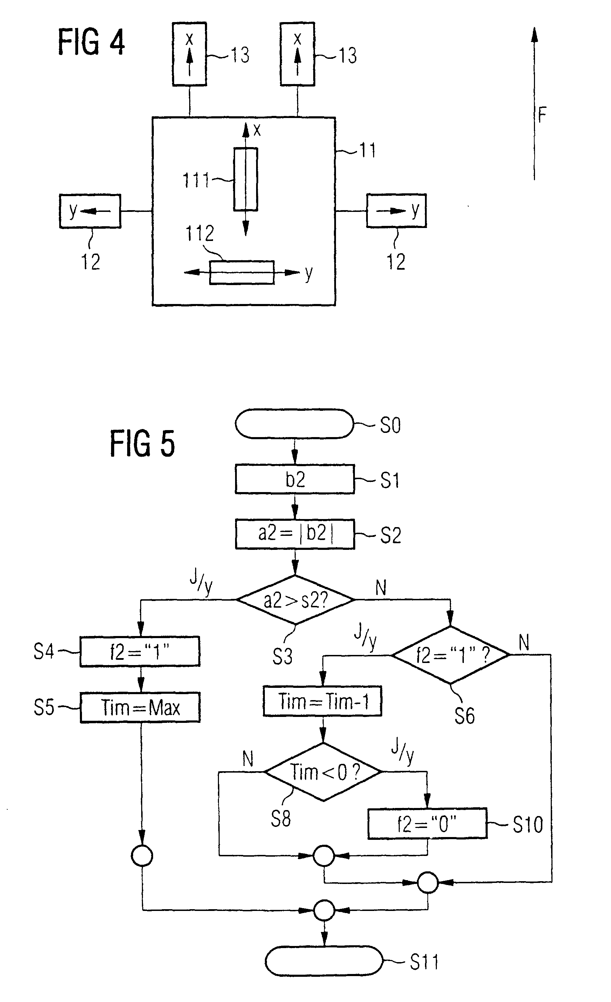

In Figur 4 ist die Sensoranordnung nach Figur 3 um einen zentral angeordneten zweiten Beschleunigungssensor 112 für Querbeschleunigungen erweitert. Über die Funktionalität der in Figur 3 beschriebenen Anordnung hinaus kann der zweite Beschleunigungssensor 112 in bekannter Weise den ausgelagerten Beschleunigungssensoren 12 für Querbeschleunigungen als Sicherheitssensor dienen. Erfindungsgemäß kann der zweite Beschleunigungssensor 112 zusätzlich oder alternativ zum ersten Beschleunigungssensor 111 als Sicherheitssensor für die Frontairbagauslösung dienen.

Figur 5 zeigt anhand eines Flußdiagramms die Berechnung des zweiten Freigabesignals f2, die im wesentlichen durch das zweite Beschleunigungssignal b2 des als Sicherheitssensors dienenden zweiten Beschleunigungssensors 112 bestimmt ist. Mit dem Schritt S0 wird eine aus den Schritten S1 bis S10 ausgewählte Schrittfolge abgearbeitet, die bei Erreichen des Schrittes S11 von neuem mit Schritt S0 beginnt. Mit Schritt S1 wird das zweite Beschleunigungssignal b2 des zweiten Beschleunigungssensors 112 in den Auswerter 2 eingelesen. Im Schritt S2 wird das Sicherheitssignal a2 durch Betragbildung des zweiten Beschleunigungssignals b2 gebildet, bevor in einem dritten Schritt S3 überprüft wird, ob das Sicherheitssignal a2 größer ist als ein zugeordneter zweiter Schwellwert s2. Ist dies der Fall - Pfad J/Y -, so wird im Schritt S4 das zweite Freigabesignal f2 gesetzt (=1), so daß, wenn gleichzeitig das erstes Freigabesignal f1 vom Auswerter 2 geliefert wird, das zugehörige Insassenschutzmittel aktiviert wird. Im Schritt S5 wird eine Zeituhr Tim auf einen Wert Max gesetzt. Dies entspricht der softwaretechnischen Realisierung eines Halteglieds. Beginnend mit dem Schritt S0 wird der zeitlich folgende Wert des zweiten Beschleunigungssignals b2 eingelesen. Ist im Schritt S3 das Sicherheitssignal a2 kleiner oder gleich dem zweiten Schwellwert s2 - Pfad N - so wird im Schritt S6 überprüft, ob das zweite Freigabesignal f2 bereits gesetzt ist (=1). Ist dies nicht der Fall - Pfad N - so besteht keine Veranlassung zu einer Änderung, da sowohl im vorhergehenden Zeitschritt wie im aktuellen Zeitschritt das Sicherheitssignal a2 kleiner oder gleich dem zweiten Schwellwert s2 ist. Wird jedoch mit Schritt S6 festgestellt, daß das zweite Freigabesignal f2 bereits gesetzt ist - Pfad J/Y - so wird im Schritt S7 die Zeituhr Tim um eine Zeiteinheit reduziert. Im Schritt S8 wird überprüft, ob die Zeituhr Tim abgelaufen ist. Ist dies der Fall - Pfad J/Y -, so wird im Schritt S10 das zweite Freigabesignal f2 rückgesetzt, da der zweite Schwellwert s2 aktuell nicht durch das Sicherheitssignal a2 überschritten ist und auch die Zeituhr Tim für ein zu einem früheren Zeitschritt gesetztes zweites Freigabesignal f2 abgelaufen ist. Ist die Zeituhr Tim noch nicht abgelaufen - Pfad N ausgehend von Schritt S8 - so bleibt auch im folgenden das zweite Freigabesignal f2 gesetzt.

Der diese und alle anderen erforderlichen Berechnungen durchführende Auswerter 2 ist vorzugsweise ein Mikroprozessor. Ggf kann der Mikroprozessor aber auch nur die Berechnung des ersten Freigabesignals f1 durchführen, während die Berechnung des zweiten Freigabesignals f2 von einer analogen Schaltungsvorrichtung durchgeführt wird.

## Patentansprüche

1. Anordnung zum Steuern eines Insassenschutzmittels eines Kraftfahrzeugs,
- mit zwei Beschleunigungssensoren (111,112) mit unterschiedlich gerichteten Empfindlichkeitsachsen (x,y,z), und
- mit einem Auswerter (2) für von den Beschleunigungssensoren (111,112) gelieferte Beschleunigungssignale (b1,b2),
- bei der der Auswerter (2) ein erstes Freigabesignal (fl) erzeugt, das zumindest abhängig ist von dem Beschleunigungssignal (b1) des ersten Beschleunigungssensors (111),
- bei der der Auswerter (2) ein zweites Freigabesignal (f2) erzeugt, das abhängig ist von dem Beschleunigungssignal (b2) des zweiten Beschleunigungssensors (112), und
- bei der ein Auslösen des Insassenschutzmittels (4) nur dann eingeleitet wird, wenn beide Freigabesignale (f1,f2) gleichzeitig (3) vorliegen, **dadurch gekennzeichnet,**
- daß der erste Beschleunigungssensor (111) eine Fahrzeuglängsbeschleunigung aufnimmt, und
- daß die Empfindlichkeitsachse (x,y,z) des zweiten Beschleunigungssensors (111) in etwa quer zur Empfindlichkeitsachse (x,y,z) des ersten Beschleunigungssensors (112) ausgerichtet ist.

2. Anordnung nach Anspruch 1, **dadurch gekennzeichnet**, daß das erste Freigabesignal (f1) erzeugt wird, wenn ein zumindest von dem ersten Beschleunigungssignal (b1) abhängiges Auslösesignal (a1) einen ersten Schwellwert (s1) überschreitet, und daß das zweite Freigabesignal (f2) erzeugt wird, wenn ein von dem zweiten Beschleunigungssignal (b2) abhängiges Sicherheitssignal (a2) einen zweiten Schwellwert (s2) überschreitet.

3. Anordnung nach Anspruch 2, **dadurch gekennzeichnet**, daß der zweite Schwellwert (s2) kleiner ausgebildet ist als der erste Schwellwert (s1).

4. Anordnung nach Anspruch 2, **dadurch gekennzeichnet**, daß das Sicherheitssignal (a2) der Betrag des zweiten Beschleunigungssignals (b2) ist.

5. Anordnung nach Anspruch 2, **dadurch gekennzeichnet**, daß das Sicherheitssignal (a2) bestimmt ist durch das Integral über den Betrag des zweiten Beschleunigungssignals (b2).

6. Anordnung nach einem der Ansprüche 2 bis 5, **dadurch gekennzeichnet,** daß im Auswerter (2) ein Halteglied (21) vorgesehen ist, das bei Überschreiten des zweiten Schwellwerts (s2) durch das Sicherheitssignal (a2) das zweite Freigabesignal (f2) mit einer festgelegten Mindestdauer erzeugt.

7. Anordnung nach einem der vorhergehenden Ansprüche, **dadurch gekennzeichnet**, daß das zweite Freigabesignal (f2) ausschließlich durch das zweite Beschleunigungssignal (b2) bestimmt ist.

8. Anordnung nach einem der vorhergehenden Ansprüche, **dadurch gekennzeichnet**, daß das Insassenschutzmittel (4) im wesentlichen für den Frontaufprallschutz vorgesehen ist.

## Claims

1. Arrangement for controlling a vehicle occupant protection means of a motor vehicle,
- having two acceleration sensors ; (111, 112) with sensitivity axes (x,y,z) in different directions, and
- having an evaluator (2) for acceleration signals (b1, b2) which are supplied by the acceleration sensors (111, 112),
- in which the evaluator (2) generates a first enabling signal (f1) which is at least dependent on the acceleration signal (b1) of the first acceleration sensor (111),
- in which the evaluator (2) generates a second enabling signal (f2) which is dependent on the acceleration signal (b2) of the second acceleration sensor (112), and
- in which triggering of the vehicle occupant protection means (4) is initiated only if both enabling signals (f1, f2) are present simultaneously (3),
characterized
- in that the first acceleration sensor (111) senses a longitudinal acceleration of the vehicle, and
- in that the sensitivity axis (x, y, z) of the second acceleration sensor (111) is oriented approximately transversely with respect to the sensitivity axis (x, y, z) of the first acceleration sensor (112).

2. Arrangement according to Claim 1, **characterized in that** the first enabling signal (f1) is generated if a triggering signal (a1) which is dependent at least on the first acceleration signal (b1) exceeds a first threshold value (s1), and in that the second enabling signal (f2) is generated if a safety signal (a2) which is dependent on the second acceleration signal (b2) exceeds a second threshold value (s2).

3. Arrangement according to Claim 2, **characterized in that** the second threshold value (s2) is smaller than the first threshold value (s1).

4. Arrangement according to Claim 2, **characterized in that** the safety signal (a2) is the absolute value of the second acceleration signal (b2).

5. Arrangement according to Claim 2, **characterized in that** the safety signal (a2) is determined via the integral of the absolute value of the second acceleration signal (b2).

6. Arrangement according to one of Claims 2 to 5, **characterized in that** a sample-and-hold element (21) is provided in the evaluator (2) and when the second threshold value (s2) is exceeded by the safety signal (a2) said sample-and-hold element (21) generates the second enabling signal (f2) with a defined minimum duration.

7. Arrangement according to one of the preceding claims, **characterized in that** the second enabling signal (f2) is determined exclusively by the second acceleration signal (b2).

8. Arrangement according to one of the preceding claims, **characterized in that** the vehicle occupant protection means (4) is provided essentially for protection against head-on impacts.

## Revendications

1. Dispositif pour commander un moyen de protection des passagers d'un véhicule automobile,
- comportant deux capteurs (111, 112) d'accélération ayant des axes (x, y, z) de sensibilité dirigés dans des directions différentes, et
- comportant un dispositif (2) d'exploitation pour des signaux (b1, b2) d'accélération fournis par les capteurs (111, 112) d'accélération,
- dans lequel le dispositif (2) d'exploitation produit un premier signal (f1) de libération qui dépend au moins du signal (b1) d'accélération du premier capteur (111) d'accélération,
- dans lequel le dispositif (2) d'exploitation produit un deuxième signal (f2) de libération qui dépend du signal (b2) d'accélération du deuxième capteur (112) d'accélération, et
- dans lequel un déclenchement du moyen (4) de protection des passagers n'est initié que si les deux signaux (f1, f2) de libération sont présents en même temps (3), **caractérisé en ce que**
- le premier capteur (111) d'accélération détecte une accélération dans la direction longitudinale du véhicule automobile, et
- l'axe (x, y, z) de sensibilité du deuxième capteur (111) d'accélération est orienté à peu près transversalement à l'axe (x, y, z) de sensibilité du premier capteur (112) d'accélération.

2. Dispositif suivant la revendication 1, **caractérisé en ce que** le premier signal (f1) de libération est produit si un signal (a1) de déclenchement dépendant au moins du premier signal (b1) d'accélération est supérieur à une première valeur (s1) seuil, et en ce que le deuxième signal (f2) de libération est produit si un signal (a2) de sécurité dépendant du deuxième signal (b2) d'accélération est supérieur à une deuxième valeur (s2) seuil.

3. Dispositif suivant la revendication 2, **caractérisé en ce que** la deuxième valeur (s2) seuil est réalisée de manière à être plus petite que la première valeur (s1) seuil.

4. Dispositif suivant la revendication 2, **caractérisé en ce que** le signal (a2) de sécurité est la valeur du deuxième signal (b2) d'accélération.

5. Dispositif suivant la revendication 2, **caractérisé en ce que** le signal (a2) de sécurité est déterminé par l'intégrale de la valeur absolue du deuxième signal (b2) d'accélération.

6. Dispositif suivant l'une des revendications 2 à 5, **caractérisé en ce qu**'il est prévu dans le dispositif (2) d'exploitation un élément (21) de maintien qui produit le deuxième signal (f2) de libération ayant une durée minimum fixée lorsque le signal (a2) de sécurité est supérieur à la deuxième valeur (s2)seuil.

7. Dispositif suivant l'une des revendications précédentes, **caractérisé en ce que** le deuxième signal (f2) de libération est déterminé exclusivement par le deuxième signal (b2) d'accélération.

8. Dispositif suivant l'une des revendications précédentes, **caractérisé en ce que** le moyen (4) de protection des passagers est prévu essentiellement pour la protection vis-à-vis d'un choc frontal.
